# EUROPÄISCHE PATENTSCHRIFT

(11) **EP 3 083 251 B1**
(45) Veröffentlichungstag und Bekanntmachung des Hinweises auf die Patenterteilung: **07.06.2023**
(21) Anmeldenummer: 14830522.0
(22) Anmeldetag: 19.12.2014
(51) Int. Cl.: B41C 1/18, B29C 59/04, B44B 5/00, B29C 59/02, B44B 5/02

(54) **VORRICHTUNG UND VERFAHREN ZUR HERSTELLUNG VON STRUKTURIERTEN OBERFLÄCHEN**
DEVICE AND METHOD FOR THE PRODUCTION OF STRUCTURED SURFACES
DISPOSITITIF ET PROCÉDÉ DE PRODUCTION DE SURFACES STRUCTURÉES

(30) Priorität: 20.12.2013 DE 102013114677
(43) Veröffentlichungstag der Anmeldung: 26.10.2016
(73) Patentinhaber: temicon GmbH, 44263 Dortmund (DE)
(72) Erfinder: HUMBACH, Oliver, 44388 Dortmund (DE); FLEGER, Markus, 59423 Unna (DE)
(74) Vertreter: Kalkoff & Partner Patentanwälte mbB
(86) Internationale Anmeldenummer: PCT/EP2014/078763
(87) Internationale Veröffentlichungsnummer: WO 2015/091961

(56) Entgegenhaltungen:
- US-A1- 2006 283 539
- US-A1- 2013 299 069

## Beschreibung

Die Erfindung betrifft eine Vorrichtung und ein Verfahren zur Herstellung eines Zylinders mit einer strukturierten Oberfläche sowie ein Prägewerkzeug und hiermit geprägtes Produkt. Insbesondere betrifft die Erfindung Vorrichtungen und Verfahren zur Herstellung mikro- oder nanostrukturierter Oberflächen.

Zur Herstellung von Oberflächenstrukturen im Mikro- oder Nanobereich sind Verfahren, bspw. Elektronenstrahl-Lithografie bekannt, die sich dazu eignen, solche Strukturen auf vergleichsweise kleiner Fläche zu erzeugen. Für eine Produktion in industriellem Ausmaß sind diese Verfahren aber nicht wirtschaftlich. Insbesondere werden für viele Anwendungen relativ große strukturierte Flächen bis zu mehreren Quadratmetern benötigt, wie bspw. für Glasfassaden, in der Displaytechnik und in der Solartechnik. Strukturen im unteren Mikrometer- oder Nanometerbereich lassen sich auf solch großen Flächen mit einem vollflächigem lithografischen Verfahren nicht wirtschaftlich herstellen.

Bekannt ist die Herstellung von strukturierten Flächen mittels Prägeverfahren. Hierzu werden geeignete Prägewerkzeuge benötigt. Von besonderem Interesse sind dabei Prägewalzen für die Vervielfältigung von Oberflächenstrukturen durch Rolle-zu-Rolle oder Rolle-zu-Platte Verfahren. Die Schwierigkeit besteht darin, ein Prägewerkzeug, insbesondere eine Prägewalze, mit einer Oberflächenstruktur im Mikro- bzw. Nanobereich zu versehen und dabei eine hohe Qualität der Struktur zu erzielen. Insbesondere stellt die Vermeidung deutlich wahrnehmbarer Nähte eine Herausforderung dar, d.h. die Stelle, an der die Oberflächenstruktur sich nach der Umfangslänge der Prägewalze wiederholt.

Nahtlose Prägewalzen können z.B. mikromechanisch durch Diamant-Schneiden hergestellt werden, oder durch Laser-Direktstrukturierung, bspw. durch Laserablation. Die kleinsten so realisierbaren Strukturbreiten liegen jedoch oberhalb von 10 Mikrometer. Die Verwendung von Piko- und Femtosekundenlasern oder so genannten Dot-Matrix Verfahren kann zur Bildung von Strukturen im unteren Mikrometer- oder Submikrometerbereich genutzt werden, allerdings nicht mit hoher Qualität der Strukturierung.

Verfahren wie Laserinterferenzlithografie eignen sich zur Herstellung planarer Oberflächen, aber nicht für eine gewölbte Zylinderoberfläche.

Die EP 1 649 969 beschreibt eine endlose Nickelmatrize zur Herstellung strukturierter Oberflächen. Durch winkelgerechtes Montieren einer flachen mit einem UV-härtbaren Lack beschichteten Prägeform auf einem Hohlzylinder und anschließendes Überprägen wird eine endlose Struktur erzeugt. Durch Metallabscheidung wird ein selbsttragender Metallzylinder erzeugt, der anschließend einem Elektroforminingverfahren unterworfen wird.

In der US 2004/00031404 A1 wird zur Bildung eines nahtlosen holografischen Musters auf einem dekorativen Medium die Verwendung einer nahtlosen Prägevorlage vorgeschlagen. Zunächst wird eine flache Vorlage auf einem Kunststoffzylinder aufgebracht, um einen Kunststoff-Master mit einem Muster auf der äußeren Oberfläche zu erhalten. Zum Aufbringen wird bevorzugt die äußere Oberfläche des Kunststoffzylinders mit einem UV-härtbaren Harz bedeckt, die flache Vorlage in das Harz gedrückt und das Harz durch UV-Belichtung ausgehärtet. Aus dem Kunststoff-Master kann ein Metall-Master erzeugt werden, indem eine Metallschicht auf die äußere Oberfläche des Kunststoff-Masters abgeschieden und der Kunststoff-Master anschließend entfernt wird. Um eine Prägevorlage zu erzeugen, wird eine andere Metallschicht auf die innere Oberfläche des Metall-Masters aufgebracht und der Metall-Master entfernt. Die Prägevorlage kann genutzt werden, um ein holografisches Muster in ein Medium wie bspw. eine PET Schicht, eine metallisierte PET Schicht oder einen anderen Träger einzuprägen.

In der DE 10 2007 061 980 A1 ist ein Verfahren zur Erzeugung einer Mikrostruktur insbesondere für die Herstellung von Sicherheitselementen mit mikrooptischen Strukturen, bspw. Moiré-Vergrößerungsanordnungen beschrieben. Eine Werkzeugform wird bereitgestellt in Form von einer bahnförmigen Kunststofffolie mit einer Oberfläche von Erhebungen und Vertiefungen in Gestalt der gewünschten Mikrostruktur. Die Vertiefungen werden mit einem härtbaren ersten Lack befüllt und die Oberfläche der Kunststofffolie mit einer Schicht aus einem härtbaren zweiten Lack in Kontakt gebracht. Der in Kontakt mit dem zweiten Lack stehende erste Lack in den Vertiefungen wird zusammen mit der Schicht aus dem zweiten Lack gehärtet und dabei verbunden. Die Oberfläche der Kunststofffolie wird von dem zweiten gehärteten Lack entfernt, so dass mit dem zweiten Lack auch der erste gehärtete Lack aus den Vertiefungen der bahnförmigen Kunststofffolie gezogen wird.

US 2006/283539 A1 offenbart ein Verfahren gemäß dem Oberbegriff des Anspruchs 1 und eine Vorrichtung gemäß dem Oberbegriff des Anspruchs 14. Die Druckschrift zeigt verschiedene Rolle-zu-Rolle Verfahren zur Bildung von Strukturen auf flexiblen Substraten. Die Strukturen können laterale Dimensionen von weniger als 100 nm bis zu mm und Dicken von einigen zehn Angström bis 10.000 Angström aufweisen. Als Substrat kann ein Material von ausreichender Flexibilität zum Aufrollen verwendet werden. Die Verfahren können die Bildung einer temporären Polymer-Struktur umfassen, von der ausgewählte Bereiche das darunter liegende Substrat freilassen. Verschiedene Verfahren können die Hinzufügung oder Entfernung von Materialien sowie die Entfernung der Polymer-Struktur umfassen.

Die Druckschrift US 2013/299069 A1 offenbart ein Prägewerkzeug gemäß dem Oberbegriff des Anspruchs 11 und ein geprägtes Produkt gemäß dem Oberbegrif des Anspruchs 13. Sie beschreibt eine Vorrichtung zur Herstellung einer Walze mit einer Ladeplatte, einer Poliervorrichtung, einer Verarbeitungsvorrichtung, einer Heißpresse, einer Aufbringvorrichtung und einer Schneidvorrichtung. Auf der Ladeplatte wird eine Metallplatte mit vorbearbeiteter Oberfläche aufgenommen und poliert. Ein Muster wird auf der polierten Oberfläche erzeugt. Durch die Heißpresse wird ein Muster in einer Harzschicht erzeugt, indem diese auf die Metallplatte gedrückt wird. Durch die Aufbringvorrichtung wird die Harzschicht auf einen Rollkörper aufgebracht und danach abgeschnitten.

Es ist Aufgabe der Erfindung, eine Vorrichtung sowie ein Verfahren und hiermit herstellbare Prägewerkzeuge und geprägte Produkte vorzuschlagen, bei denen eine gewünschte Oberflächenstruktur mit hoher Qualität und mit möglichst geringer Wahrnehmbarkeit einer Naht bzw. Fügestelle erzielt werden kann.

Die Aufgabe wird gelöst durch ein Verfahren gemäß Anspruch 1 und eine Vorrichtung gemäß Anspruch 14 zur Herstellung eines Zylinders mit einer strukturierten Oberfläche. Weiter wird die Aufgabe gelöst durch ein Prägewerkzeug gemäß Anspruch 11, das ausgehend von dem erfindungsgemäßen Verfahren durch weitere Schritte herstellbar ist, und durch ein hiermit geprägtes Produkt gemäß Anspruch 13. Abhängige Ansprüche beziehen sich auf vorteilhafte Ausführungsformen der Erfindung.

Die vorliegende Erfindung konzentriert sich zunächst auf die Erstellung eines möglichst nahtlosen Zylinders mit einer strukturierten Oberfläche. Unter einem Zylinder wird hierbei jede zylindrische Form verstanden, wobei zu Prägezwecken selbstverständlich runde Querschnittsformen wie insbesondere ein Kreis oder ggf. auch eine Ellipsenform bevorzugt ist. Der erfindungsgemäße Zylinder kann auch eine Hülse sein.

Der Zylinder kann je nach späterer Verwendung verschiedene Dimensionen aufweisen, bspw. Umfangslängen von 10 cm oder mehr, bevorzugt 15 cm oder mehr, besonders bevorzugt 30 cm oder mehr. Die Breite des Zylinders in Achsrichtung kann bspw. 5 cm oder mehr betragen, bevorzugt 20 cm oder mehr.

Eine strukturierte äußere Oberfläche des Zylinders wird erfindungsgemäß gebildet, indem auf einer Vorlagefläche, die ihrerseits eine Oberflächenstruktur, nämlich das Negativ der späteren Außenstruktur des Zylinders, aufweist, ein Strukturfeld als Lackschicht gebildet wird. Die Lackschicht wird dann von der Vorlagefläche auf die äußere Oberfläche des Zylinders aufgebracht, also auf diese übertragen. Das Strukturfeld, d.h. die Lackschicht formt die Oberflächenstruktur der Vorlagefläche ab und weist somit die gewünschte Oberflächenstruktur auf. Diese Arbeitsweise, bei der zunächst ein dünnes Strukturfeld mit gewünschter Oberflächenstruktur erstellt und dann auf einen Zylinder übertragen wird, kann auch als "Transfer-Film" Technik bezeichnet werden.

Die Oberflächenstruktur des Strukturfelds weist bevorzugt laterale Strukturbreiten im unteren Mikro- bzw. im Nanometer-Bereich auf. Mit der Erfindung können feinste Strukturen mit Strukturbreiten von bspw. unter 100nm erzeugt werden, bis zu bspw. 50 nm. Ebenso können die Strukturbreiten aber darüber liegen, bspw. bis 10 µm. Eine bevorzugte Tiefe der Strukturen kann ebenfalls im Nanometerbereich liegen, bspw. bei 50-200 nm.

Erfindungsgemäß ist das Strukturfeld eine sehr dünne Lackschicht mit einer Dicke von 800 nm oder weniger. Bevorzugt werden sogar noch dünnere Schichten von 500 nm oder weniger oder sogar 400 nm oder weniger verwendet. Eine Untergrenze der Dicke der Lackschicht ist durch deren Stabilität bei der Übertragung gegeben und liegt bspw. bei mindestens 100 nm oder bevorzugt bei mindestens 200 nm.

Strukturfelder in Form so dünner Schichten können auf den Zylinder auf Stoß, aber insbesondere bevorzugt auch mindestens teilweise überlappend aufgebracht werden, wobei aufgrund der sehr geringen Schichtdicke die Ränder nicht bzw. nur in sehr geringen Maß wahrnehmbar sind. Dies gilt insbesondere, wenn die Schichtdicke Wellenlängenbereich sichtbaren Lichts oder darunter liegt.

Der ein Substrat für das übertragene Strukturfeld bildende Zylinder kann mit einem einzigen solchen Strukturfeld belegt sein. Dabei ergibt sich eine Kante, wo die Ränder des Strukturfelds auf Stoß aneinander liegen oder eine Überlappung bilden. Ebenso kann der Zylinder mit mehreren Strukturfeldern belegt werden, so dass sich mehrere Stoßkanten oder Überlappungskanten bilden. Bei mehreren Strukturfeldern ist eine regelmäßige Anordnung möglich, bevorzugt wird aber ein Versatz, besonders bevorzugt ein variabler, unregelmäßiger Versatz.

Erfindungsgemäß ist die Vorlagenfläche eben. Für die Vorlagenfläche kommen verschiedene Materialien in Frage, insbesondere Metall, Kunststoffe, Glas, Silikon, etc. Besonders bevorzugt sind für eine Belichtung durch die Vorlagefläche hindurch, wie nachfolgend näher erläutert wird, transparente Materialien. Ein besonders bevorzugter Aufbau für die Vorlagefläche umfasst ein festes Material wie bspw. Glas, auf dem ein Polymer mit der gewünschten Oberflächenstruktur, d. h. als Polymerstempel aufgebracht ist. Bspw. kann der Stempel aus PDMS gebildet sein.

Gemäß einer bevorzugten Ausführungsform der Erfindung ist die Lackschicht UV-aushärtbar. Weiter ist bevorzugt, dass eine Aushärtung der Lackschicht während der Übertragung auf den Zylinder erfolgt. Dies hat sich als besonders vorteilhaft erwiesen, um eine Übertragung des Strukturfelds ohne mechanische Defekte und Verzerrungen zu erreichen und auf der Oberfläche des Zylinders eine gehärtete Lackschicht zu erhalten.

In einer bevorzugten Ausführungsform erfolgt eine UV-Belichtung bei Übertragung des Strukturfelds auf den Zylinder in einem begrenzten, linienförmigen Belichtungsfeld. Das Belichtungsfeld erstreckt sich dabei bevorzugt entlang der Achse des Zylinders. Unter einem linienförmigen Verlauf wird hierbei eine längliche, schmale Form verstanden. Der Verlauf der Längskanten ist dabei bevorzugt scharf. Dabei können die längs verlaufenden Kanten des Belichtungsfeldes einen geraden Verlauf aufweisen, mindestens in Abschnitten.

Dies ist aber keineswegs notwendig, vielmehr ist es sogar bevorzugt, wenn die Kanten einen nicht-geraden Verlauf aufweisen. Möglich sind bspw. zackig verlaufende Randlinien des Belichtungsfeldes ebenso wie ein wellenförmiges Belichtungsfeld oder ein Belichtungsfeld mit unregelmäßiger, insbesondere stochastischer Berandung, d. h. ohne erkennbares, regelmäßiges Muster.

Erfindungsgemäß wird die ungehärtete Lackschicht von einer ebenen Vorlagefläche bei einem Abrollen des Zylinders gegenüber der Vorlagefläche auf den Zylinder übertragen. Hierfür ist besonders bevorzugt, dass der Zylinder um eine feste Achse drehend gelagert ist und die Vorlagefläche demgegenüber bewegt wird, um die abrollende Übertragung des Strukturfelds auf den Zylinder zu ermöglichen.

Ein geeignetes Belichtungsfeld kann bspw. durch eine Projektionsbelichtung erzielt werden. Dabei wird das Licht einer Lichtquelle, bevorzugt UV-Lichtquelle, durch eine Maske geleitet und das durch die Maske hindurchtretende Licht mittels einer Projektionsoptik auf die Lackschicht projiziert. Somit stellt das Belichtungsfeld eine Projektion der Öffnung in der Maske dar, so dass eine gewünschte Form des Belichtungsfeldes durch eine entsprechende Maskenform erzielt werden kann. Die Maske kann also bspw. eine Schlitzmaske mit einem gewünschten linienförmigen Schlitzverlauf sein, mit der durch Projektion das entsprechende Belichtungsfeld erzeugt wird.

Das auf den Zylinder übertragene Strukturfeld weist eine vordere Kante auf, an der mit der Übertragung begonnen wurde, und eine hintere Kante, an der die Übertragung beendet wurde. Dabei sind nicht-gerade Kantenverläufe bevorzugt, weil sie weniger gut vom menschlichen Auge wahrgenommen werden. Die vordere und die hintere Kante können wie erläutert auf Stoß gegeneinander liegen oder es kann eine Überlappung gebildet sein.

Gemäß einer Weiterbildung der Erfindung wird, nachdem zunächst bei der Übertragung eine Belichtung, bevorzugt UV-Belichtung erfolgt, der Übertragungsvorgang durch Abschalten der Belichtung beendet, so dass auf diese Weise die hintere Kante gebildet wird. Während die Beendigung der Übertragung des Strukturfeldes sonst auch mechanisch erfolgen kann, ermöglicht die Abschaltung der Belichtung, bevorzugt bei weiterlaufender mechanischer Übertragung, eine sehr gezielte Steuerung. Denn ungehärteter Lack, der nach Abschalten der Belichtung noch auf den Zylinder übertragen wird, kann in nachfolgenden Reinigungsschritten leicht entfernt werden. Somit kann durch Abschalten der Belichtung exakt der Ort und die Form der auf dem Zylinder gebildeten hinteren Kante des Strukturfelds vorgegeben werden.

Insbesondere bei der bevorzugten linienförmigen Belichtung mit einer geeigneten Form des Belichtungsfeldes kann somit exakt der Kantenverlauf einer Stoßkante, oder besonders bevorzugt einer Überlappungskante auf dem Zylinder vorgegeben werden. Sowohl für die vordere als auch die hintere Kante kann so die Kantenform gewählt werden. Insbesondere lässt sich auf diese Weise gezielt ein nicht-gerader Randverlauf des Strukturfeldes, bspw. an einer Stoß- oder Überlappungskante vorgeben.

Die erfindungsgemäße Herstellungsvorrichtung weist Mittel zur Bildung des Strukturfelds als Lackschicht auf der Vorlagefläche auf. Bspw. kann eine Lackschicht der erfindungsgemäßen Dicke von 800 nm oder weniger mittels Spin-Coating oder Dip-Coating erreicht werden. Weiter umfasst die erfindungsgemäße Herstellungsvorrichtung Mittel zum Übertragen des Strukturfelds auf die äußere Oberfläche des Zylinders, insbesondere bevorzugt in Form eines Abrollens des Zylinders gegenüber einer ebenen Vorlagefläche, wobei die Vorlagefläche weiter bevorzugt gegenüber dem Zylinder verschoben wird. Weiter bevorzugt kann die Herstellungsvorrichtung eine UV-Belichtung, insbesondere die oben beschriebene Projektionsoptik umfassen.

Nachdem mit dem erfindungsgemäßen Verfahren zunächst ein Zylinder erstellt wird, bei dem die gewünschte Oberflächenstruktur als gehärtete Lackschicht auf der Außenseite aufgebracht ist, kann gemäß einer bevorzugten Ausführung in weiteren Schritten aus dem so erhaltenen Lack-Master ein metallischer Prägezylinder bzw. eine metallische Prägehülse erstellt werden. Hierzu kann wenigstens eine metallische Schicht mit der entsprechend strukturierten Oberfläche bspw. durch Galvanoformung erstellt werden. Grundsätzlich sind verschiedene Abfolgen von Schritten möglich, um durch Abformung aus dem Lack-Master einen Prägezylinder oder eine Prägehülse zu erzeugen, bei der die Oberflächenstruktur in einer äußeren Metallschicht, bspw. Nickel abgebildet ist. Entsprechende Schrittfolgen sind im Stand der Technik beschrieben, bspw. in US 2004/00031404 A1. In einer bevorzugten Abfolge wird zunächst auf die Lackschicht eine erste Metallschicht aufgebracht, die dann die gewünschte Oberflächenstruktur als Innenstruktur aufweist. Im Inneren der Schicht aus dem ersten Metall wird dann eine Schicht aus einem zweiten Metall, bevorzugt Nickel, gebildet und das äußere Metall entfernt. Die aus dem zweiten Material gebildete Struktur kann bspw. als Prägewerkzeug (bspw. als Prägewalze, Prägehülse oder endloses Prägeband) verwendet werden.

Der mit dem erfindungsgemäßen Verfahren und der erfindungsgemäßen Vorrichtung herstellbare Lack-Master weist bevorzugt eine Überlappungskante auf. Während das Aufbringen der Ränder des Strukturfelds auf den Zylinder auf Stoß im Prinzip denkbar ist, wird die Bildung einer solchen Überlappungskante wegen der einfacheren Herstellbarkeit bevorzugt. Die Überlappung führt zwar zu einer entlang der Überlappungskante dickeren Lackschicht auf dem Lack-Master. Aufgrund der sehr geringen Schichtdicke ergibt sich aber auch eine entsprechend nur sehr geringfügige Verdickung an der Überlappungskante. Der Höhenunterschied an der Überlappungskante entspricht dabei in etwa der Schichtdicke von 800 nm oder weniger, bevorzugt 500 nm oder weniger, besonders bevorzugt 400 nm oder weniger. Der Verlauf dieser Überlappungskante ist wie oben erläutert bevorzugt nicht gerade.

Da das Prägewerkzeug wie erläutert bevorzugt durch Abformen des Lack-Masters hergestellt wird, weist dieses an der Oberfläche ebenfalls die Form der Überlappungskante, d. h. den entsprechenden Höhenunterschied auf. Dieser wird aber aufgrund der sehr geringen Abmessungen regelmäßig nur durch gezielte Analyseverfahren sichtbar sein. Besonders bei dem bevorzugten nicht-geraden Verlauf in Verbindung mit dem geringen Höhenunterschied wird die im Prägezylinder letztlich auftretende Form der Überlappungskante als geringfügiger Höhenunterschied mit bloßem Auge regelmäßig nicht sichtbar sein, sondern nur bei mikroskopischer Untersuchung.

Das erfindungsgemäße geprägte Produkt wird mit dem oben beschriebenen Prägewerkzeug hergestellt. Dabei kann es sich bspw. um ein Rolle-zu-Platte- oder um ein Rolle-zu-Rolle-Verfahren handeln. Das geprägte Produkt ist bevorzugt ein flächiges Produkt. Die Einprägung kann bspw. in ein Kunststoffmaterial erfolgen, bspw. thermoplastisch in eine Kunststoff-Folie. Ebenso kann im Prägeverfahren ein UV-aushärtbarer Lack auf einem Träger (bspw. Kunststoffolie, Glas, etc.) strukturiert werden. Für eine strukturierte Oberfläche aus einem anorganischen Material kann auf der Oberfläche einer Glasscheibe eine Sol-Gel Beschichtung durch Prägen strukturiert werden.

Die durch das erfindungsgemäße Prägewerkzeug eingeprägte Oberflächenstruktur des geprägten Produkts weist eine entsprechend dem Umfang des Prägezylinders wiederkehrende Einprägung der Form der Überlappungskante auf. Auch hier zeigt sich der sehr geringe Höhenunterschied. Insbesondere in Verbindung mit dem bevorzugt nicht-geraden Verlauf führt dies bei dem geprägten Produkt dazu, dass die Einprägung der Form der Überlappungskante regelmäßig für das menschliche Auge nicht wahrnehmbar sein wird.

Nachfolgend werden Ausführungsformen der Erfindung anhand von Zeichnungen näher erläutert. Dabei zeigen:
- Fig. 1: in schematischer Darstellung eine Draufsicht auf eine Vorrichtung zur Herstellung einer strukturierten Oberfläche;
- Fig. 2: in schematischer Seitenansicht die Vorrichtung aus Fig. 1;
- Fig. 3: in schematischer Seitenansicht ein Teil der Vorrichtung aus Fig. 2;
- Fig. 4: in schematischer Seitenansicht einen Zylinder mit aufgebrachter Lackschicht;
- Fig. 5: eine Vergrößerung eines Teils der Fig. 4;
- Fig. 6: in schematischer, perspektivischer Ansicht den Zylinder aus Fig. 4;
- Fig. 7a - 7e: Maskenformen für die Vorrichtung aus Fig. 1-3;
- Fig. 8a - 8c: in schematischen, perspektivischen Ansichten die Ergebnisse von Verfahrensschritten zur Herstellung eines Prägewerkzeugs;
- Fig. 9: in schematischer, perspektivischer Ansicht ein Prägewerkzeug beim Prägevorgang.

Mikro- und insbesondere nanostrukturierte Flächen, d. h. Flächen, auf denen eine Struktur mit Erhebungen und Vertiefungen gebildet ist, können zu zahlreichen Zwecken eingesetzt werden, bspw. auf Glasfassaden, in der Display- oder Solartechnik.

Zur Herstellung können insbesondere Prägewerkzeuge verwendet werden. Um derartige Prägewerkzeuge mit qualitativ hochwertiger Oberflächenstruktur bereitzustellen, werden zunächst Form-Master benötigt, die eine entsprechende Oberflächenstruktur aufweisen. Ausgehend von einem solchen Form-Master kann ein Prägewerkzeug, bspw. Prägewalze, Prägehülse oder endloses Prägeband durch Abformen hergestellt werden.

Ausgangspunkt für die Herstellung ist eine Mikro- oder Nanostruktur, die bspw. auf einer planaren Oberfläche z. B. durch Elektronenstrahl-, UV-Lithografie oder Laserinterferenzlithografie in einen Fotolack hergestellt wird. Diese Originalstruktur, die bevorzugt in ein geeignetes Material übertragen wird, wird als Vorlagefläche genutzt, um die Oberflächenstruktur abzuformen. Bspw. kann eine Vorlagefläche als Polymerstempel, z. B. aus PDMS erstellt werden.

Die Darstellung in den nachfolgend beschriebenen Figuren soll zum besseren Verständnis dienen und ist lediglich schematisch zu verstehen. Die Darstellung ist nicht maßstabsgerecht; eine maßstäbliche Darstellung wäre angesichts der sehr dünnen Schichten und sehr kleinen Strukturbreiten im Nanometer-Bereich nicht sinnvoll.

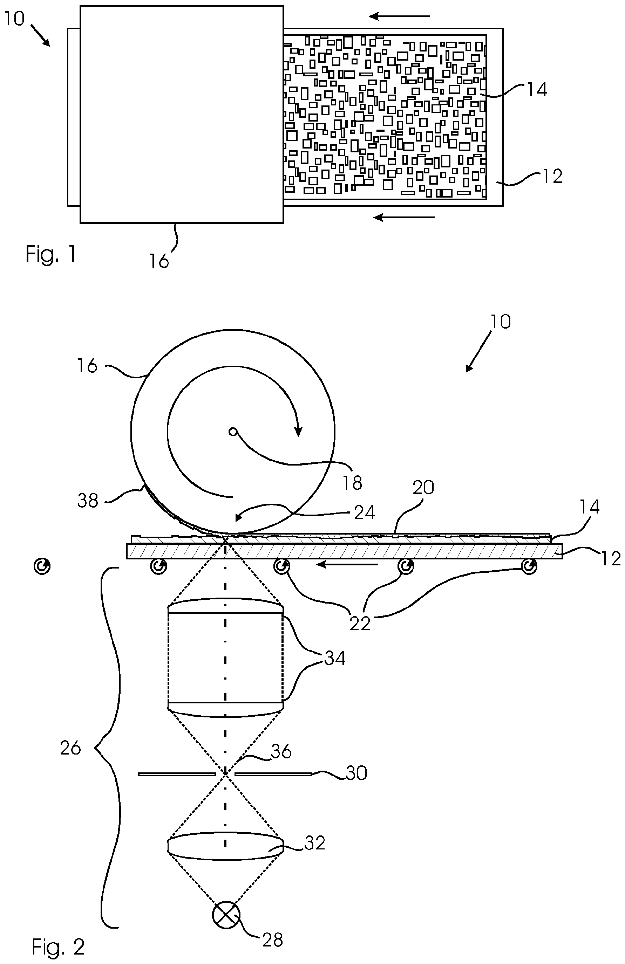

Fig. 1 zeigt eine Vorrichtung 10 zur Herstellung eines Zylinders mit strukturierter Oberfläche. Auf einer ebenen Glasplatte 12 befindet sich eine Vorlagefläche 14 als transparenter Polymerstempel mit der hier lediglich schematisch angedeuteten Oberflächenstruktur. Oberhalb der Vorlagefläche 14 befindet sich ein Zylinder 16 mit kreisförmiger Grundfläche, bspw. ein Glaszylinder. Während je nach Verwendung verschiedene Größen des Zylinders 16 und der Vorlagefläche 14 möglich sind, hat in dem dargestellten Beispiel der Zylinder 16 einen Durchmesser von 15 cm und eine Breite von 15 cm.

Fig. 2 zeigt die Vorrichtung in Seitenansicht. Der Zylinder 16 ist um eine feste Drehachse 18 drehbar oberhalb der Vorlagefläche 14 auf der Glasplatte 12 angeordnet.

Zur Abformung wird auf die Oberflächenstruktur der Vorlagefläche 14 eine sehr dünne Lackschicht 20 aufgetragen. Die Dicke der Lackschicht 20 beträgt bevorzugt 500 nm oder weniger. Im vorliegenden Beispiel wird eine Lackschicht 20 einer Dicke von 300 nm gebildet. Die Schicht kann auf der Vorlagefläche 14 bspw. durch Spin-Coating aufgebracht werden. Die Lackschicht 20 besteht dabei in der dargestellten bevorzugten Ausführungsform aus einem UV-härtbaren Lackmaterial, das zunächst in flüssiger, ungehärteter Form auf der Vorlagefläche 14 verbleibt.

Die Lackschicht 20 formt die Oberflächenstruktur der Vorlagefläche 14 ab.

Mit der Vorrichtung 10 wird die Lackschicht 20 als Strukturfeld auf den Zylinder 16 übertragen, was als Transfer-Film-Technologie bezeichnet wird.

Die Übertragung erfolgt wie in Fig. 2 schematisch gezeigt durch ein Abrollen des Zylinders 16 gegenüber der Vorlagefläche 14. Dies wird bei feststehender Drehachse 18 des Zylinders 16 erzielt durch eine Transportvorrichtung 22, die eine Verschiebung der Glasplatte 12 als Träger unterhalb der Vorlagefläche 14 bewirkt. Synchron hierzu erfolgt eine Drehung des Zylinders 16, so dass sich an der Übertragungsstelle 24, an der sich der Zylinder 16 und die Lackschicht 20 berühren, gleiche Vorschubgeschwindigkeiten ergeben.

Bei der Übertragung der Lackschicht erfolgt eine Belichtung mittels einer Belichtungsvorrichtung 26. Die Belichtung erfolgt dabei in der dargestellten bevorzugten Ausführung von unten, d. h. durch die Glas-Trägerplatte 12 und die Vorlagefläche 14 hindurch. Aus diesem Grund ist das Material der Vorlagefläche 14 ebenso wie das Material der Trägerplatte 12 (Glas) transparent gewählt.

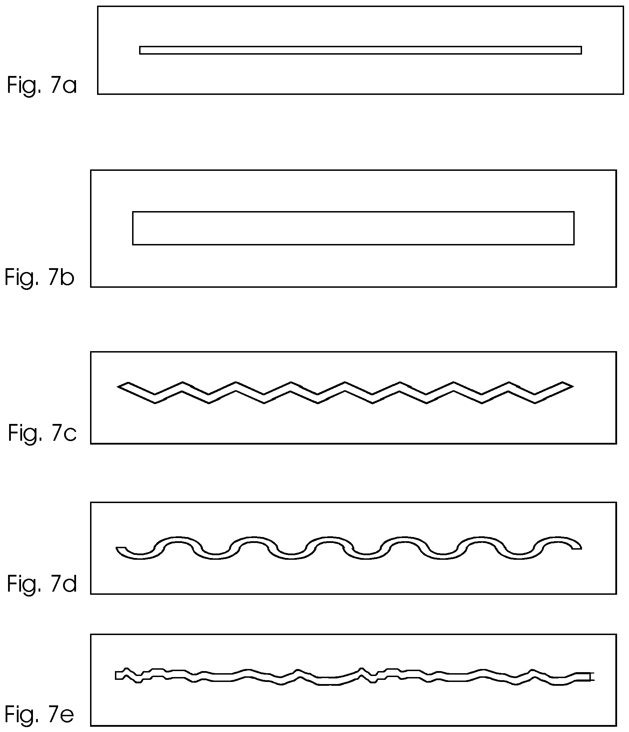

Die Belichtungsvorrichtung 26 umfasst eine UV-Lichtquelle 28, bevorzugt als LED- oder Laserlichtquelle, eine Schlitzmaske 30 und ein optisches System 32, 34 zur Fokussierung und Projektion auf die Übertragungsstelle 24. Die Maske 30 weist einen linienförmigen Schlitz 36 auf, der parallel zur Achse 18 des Zylinders 16 ausgerichtet ist. Beispielhafte Schlitzformen sind in Fig. 7a - 7e dargestellt, insbesondere schmale oder breite gerade Schlitzformen (Fig. 7a, 7b), gezackte Schlitzform (Fig. 7c), Wellenform (Fig. 7d) oder unregelmäßiger, stochastischer Verlauf (Fig. 7e).

Das optische System umfasst eine Beleuchtungsoptik 32 32 zur Beleuchtung des Schlitzes und eine Projektionsoptik 34 zur Projektion eines Abbildes des Schlitzes 36 auf die Übertragungsstelle 24. Mit dem optischen System wird an der Übertragungsstelle 24 eine scharfe Abbildung des Schlitzes 36 erzielt. Diese Abbildung wirkt als begrenztes Belichtungsfeld, innerhalb dessen UV-Licht auf die Lackschicht 20 einwirkt, während der Bereich außerhalb abgeschattet bleibt. Im dargestellten Beispiel umfasst die Beleuchtungsoptik eine erste Linse 32, um eine möglichst gleichmäßige Beleuchtung des Schlitzes 36 zu erreichen. Die Projektionsoptik umfasst im Beispiel zwei Linsen 34, um das Schlitz-Abbild scharf zu projizieren.

Durch die Belichtung an der Übertragungsstelle 24 wird bei der dargestellten Relativbewegung des Zylinders 16 gegenüber der Vorlagefläche 14 die Lackschicht 20 auf die äußere Oberfläche des Zylinders 16 übertragen. Durch den Aushärtevorgang während der Übertragung findet gleichzeitig eine Verklebung mit der Zylinderoberfläche statt. Bevorzugt ist dabei durch eine Antihaftbeschichtung der Vorlagefläche 14 die Haftung der Lackschicht 20 verringert, so dass der Transfer erleichtert wird.

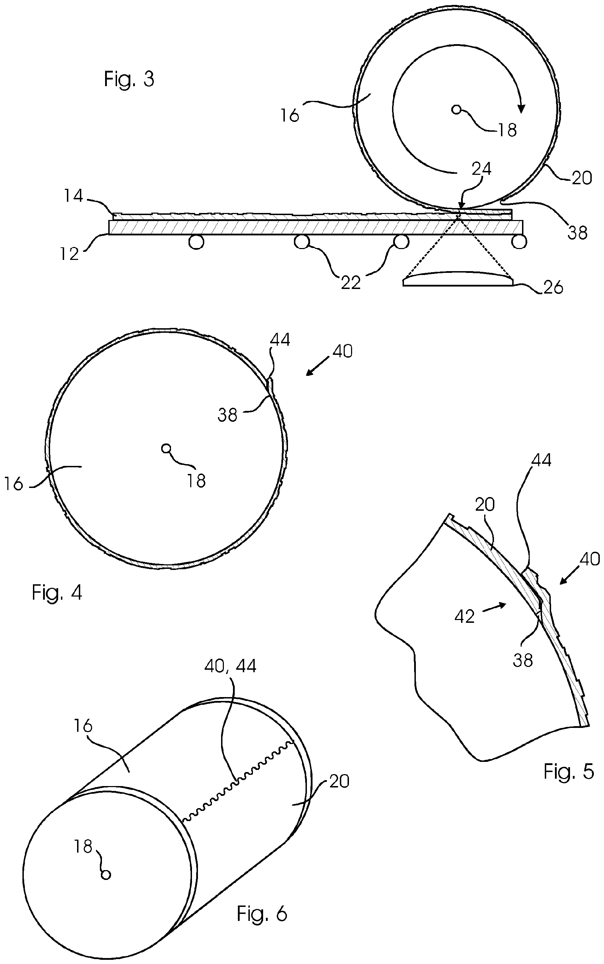

Fig. 3 zeigt schematisch die Vorrichtung aus Fig. 1, Fig. 2 nach fast vollständiger Übertragung der Lackschicht 20 auf den Zylinder 16. Die Glas-Trägerplatte 12 mit der Vorlagefläche 14 ist fast vollständig an der Übertragungsstelle 24 vorbeigeführt worden, so dass die Lackschicht 20 fast den gesamten Umfang des Zylinders 16 bedeckt.

Während im Prinzip eine Anordnung der vorderen Kante 38 und hinteren Kante 44 der als Strukturfeld übertragenen, gehärteten Lackschicht 20 auf Stoß möglich wäre, wird bei der beschriebenen Ausführung eine Überlappungskante 40, wie in Fig. 4, Fig. 5 gezeigt, gebildet. Dabei erfolgt eine fortgesetzte Übertragung der Lackschicht 20 auf den Zylinder 16 auch dann, wenn die vordere Kante 38 der übertragenen, gehärteten Lackschicht die Übertragungsstelle 24 ein weiteres Mal passiert. So wird unter zunächst fortgesetzter Belichtung die Lackschicht 20 überlappend über die Kante 38 aufgetragen, so dass in einem Überlappungsbereich 42 eine doppelte Lackschicht 20 entsteht. Der resultierende Zylinder 16 ist in Fig. 4 dargestellt, die Überlappungskante 40 in Vergrößerung in Fig. 5.

Während im Prinzip auch die Abschaltung des Vortriebs der Trägerplatte 12 und der Drehung des Zylinders 16 zur Beendigung der Übertragung der Lackschicht 20 möglich wäre, wird bei der gezeigten, bevorzugten Ausführung die Übertragung der Lackschicht 20 als gehärtetes Strukturfeld auf den Zylinder 16 durch ein plötzliches Abschalten der Belichtung durch die Belichtungsvorrichtung 26 erzielt, während gleichzeitig die Drehung des Zylinders 16 und der Transport der Glasplatte 12 noch für einen kurzen Zeitraum fortgesetzt werden kann. Somit kann es zwar noch zur Übertragung von ungehärtetem Lack der Lackschicht 20 auf den Zylinder 16 kommen. Ohne Belichtung härtet der Lack aber nicht aus und kann von der Oberfläche des Zylinders 16 leicht abgewaschen werden.

Durch das plötzliche Ausschalten der Belichtungsvorrichtung 26 bildet sich eine hintere Kante 44 des Strukturfelds 20, wie insbesondere in der Vergrößerung in Fig. 5 ersichtlich. Der Verlauf der hinteren Kante 44 in Richtung der Drehachse 18 des Zylinders 16 entspricht dabei der Form des Schlitzes 36 der Maske 30. Denn durch die Abbildung des Schlitzes 36 an der Übertragungsstelle 24 erfolgt die Belichtung mit der abgebildeten Schlitzform, so dass eine Aushärtung der Lackschicht 20 ebenfalls in dieser Form erfolgt. Dasselbe gilt für die vordere Kante 38, sofern die Übertragung durch plötzliches Einschalten der Belichtung begonnen wird.

Fig. 6 zeigt schematisch den Zylinder 16 als fertiger Lack-Master mit dem als ausgehärtete Lackschicht 20 aufgebrachten Strukturfeld 20 und der Überlappungskante 40, die sich als erhöhter Überlappungsbereich 42 mit einer vorderen Abschlusskante 44 darstellt. Während hier ein welliger Verlauf gezeigt ist, kann wie erläutert je nach verwendeter Maskenform (Fig. 7a - 7e) ein hiervon abweichender Verlauf der Überlappungskante 40 erzielt werden.

Aufgrund der äußerst geringen Schichtdicke der Lackschicht 20 ergibt sich an der Überlappungskante 40 eine nur geringfügige Erhöhung im Überlappungsbereich 42. Insbesondere bei einer Schichtdicke im Bereich nahe der Wellenlänge sichtbaren Lichts ist eine solche geringfügige Erhöhung für das menschliche Auge regelmäßig nicht sichtbar. Dies gilt insbesondere dann, wenn durch eine nicht-gerade Schlitzform ein entsprechender nicht-gerader Verlauf der vorderen Abschlusskante 44 erzielt wird.

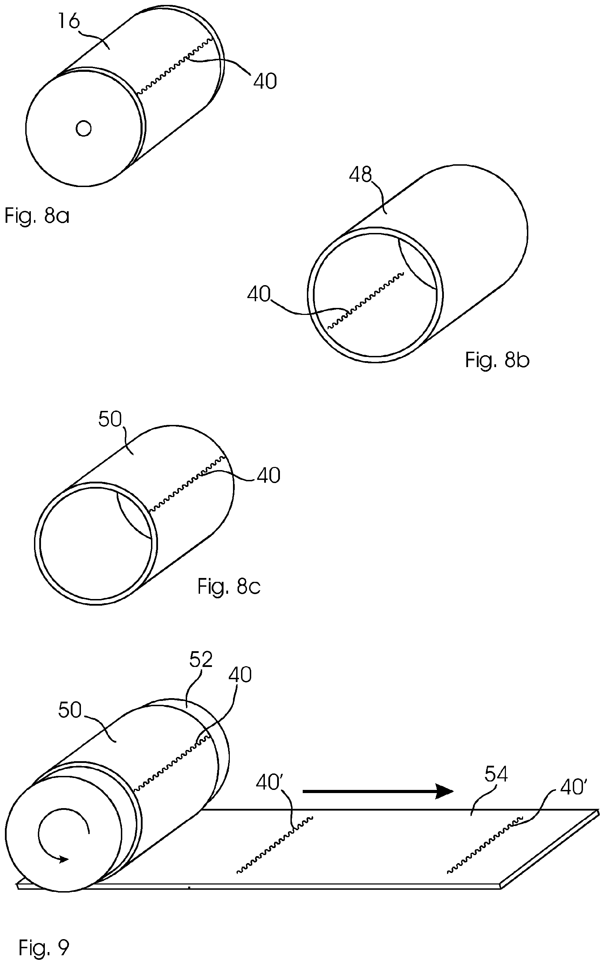

Aus dem als Lack-Master erstellten Zylinder 16 wird in mehreren Schritten wie schematisch in Fig. 8a - 8c gezeigt ein Prägewerkzeug erstellt. Dabei wird zunächst um den Zylinder 16 herum eine Metallschicht 48 aufgebracht und danach der Zylinder 16 aus dem Inneren der Metallschicht 48 entfernt, so dass die in Fig. 8b gezeigte Hülle mit einer Innenkontur, insbesondere auch mit der Überlappungskante 40 verbleibt. Im Inneren der durch die Metallschicht 48 gebildeten Hülse wird eine zweite Metallschicht 50 abgeschieden, die dann wiederum auf ihrer äußeren Oberfläche die Oberflächenstruktur mit der Überlappungskante 40 aufweist. Die erste Metallschicht 48 wird entfernt, so dass die zweite Metallschicht wie in Fig. 8c gezeigt als Hülse 50 mit Außenstruktur verbleibt.

Die Hülse 50 wird als zylindrische Prägehülse verwendet wie schematisch in Fig. 9 dargestellt. Hierfür wird die Prägehülse 50 auf eine Kernwalze 52 aufgezogen, mit der wie in Fig. 9 schematisch gezeigt in einem Rolle-zu-Platte-Verfahren (oder alternativ, nicht dargestellt, in einem Rolle-zu-Rolle-Verfahren) die Oberfläche eines flachen, bahnförmigen Kunststoff-Produkts 54 geprägt wird. Dabei bildet sich die strukturierte Oberfläche der Prägehülse 50 in der Oberfläche des geprägten Produkts 54 ab. Die Oberfläche des geprägten Produkts 54 weist dann auch in entsprechend der Umfangslänge der Hülse 50 wiederkehrenden Abständen Abdrücke 40' der Überlappungskante 40 auf, die sich als entsprechende Höhenunterschiede abbilden.

Die vorstehende Beschreibung von Ausführungsformen ist lediglich illustrativ und nicht beschränkend zu verstehen; die Erfindung ist nicht auf diese konkreten Ausführungsformen beschränkt. Zu den gezeigten Ausführungen gibt es eine Anzahl von möglichen Änderungen und Alternativen. Bspw. kann die Belichtung statt wie dargestellt durch die Vorlagefläche 14 hindurch auch in anderer Weise erfolgen, insbesondere im Fall eines transparenten Materials des Zylinders 16 durch dieses Zylindermaterial hindurch. Statt des bevorzugten Polymermaterials können auch andere Materialien für die Vorlagefläche 14 verwendet werden. Während sich die Bildung einer Überlappungskante 40 wie beschrieben als besser realisierbar erwiesen hat, ist alternativ auch die Bildung einer Stoßkante möglich, bei der sich die vordere Kante 38 und hintere Kante 44 des auf den Zylinder 16 übertragenen Strukturfelds 20 stoßartig direkt gegenüber liegen.

## Patentansprüche

1. Verfahren zur Herstellung eines Zylinders (16) mit einer strukturierten Oberfläche, bei dem
- auf einer ebenen Vorlagefläche (14) mit einer Oberflächenstruktur ein Strukturfeld als Lackschicht (20) einer Dicke von 100 - 800 nm gebildet wird, die die Oberflächenstruktur abformt,
- und das Strukturfeld (20) auf die äußere Oberfläche eines Zylinders (16) aufgebracht wird, **dadurch gekennzeichnet, dass** die ungehärtete Lackschicht (20) von der Vorlagefläche (14) bei einem Abrollen des Zylinders (16) gegenüber der Vorlagefläche (14) auf den Zylinder (16) übertragen wird.

2. Verfahren nach Anspruch 1, bei dem
- das Strukturfeld (20) auf der äußeren Oberfläche des Zylinders (16) so angeordnet wird, dass sich mindestens eine Überlappungskante (40) ergibt.

3. Verfahren nach einem der vorangehenden Ansprüche, bei dem
- die Lackschicht (20) UV-aushärtbar ist,
- und während der Übertragung eine Aushärtung der Lackschicht (20) erfolgt.

4. Verfahren nach einem der vorangehenden Ansprüche, bei dem
- die Oberflächenstruktur laterale Strukturbreiten von unter 100nm aufweist.

5. Verfahren nach einem der vorangehenden Ansprüche, bei dem
- das Strukturfeld (20) mindestens einen nicht-geraden Rand (44) aufweist.

6. Verfahren nach einem der vorangehenden Ansprüche, bei dem
- aus dem Zylinder (16) mit aufgebrachtem Strukturfeld (20) ein Prägezylinder oder eine Prägehülse erstellt wird, wobei durch Galvanoformung mindestens eine metallische Schicht mit strukturierter Oberfläche erstellt wird.

7. Verfahren nach einem der vorangehenden Ansprüche, bei dem
- bei der Übertragung des Strukturfelds (20) auf den Zylinder (16) eine Belichtung mit UV-Licht erfolgt,
- wobei die Belichtung in einem begrenzten, linienförmigen Belichtungsfeld erfolgt.

8. Verfahren nach einem der vorangehenden Ansprüche, bei dem
- eine Belichtung mit UV-Licht durch eine Projektionsbelichtung erfolgt, bei der das Licht einer UV-Lichtquelle (28) durch eine Maske (30) geleitet wird und durch die Maske (30) hindurchtretendes Licht mittels einer Projektionsoptik (34) auf die Lackschicht projiziert wird.

9. Verfahren nach einem der vorangehenden Ansprüche, bei dem
- das Belichtungsfeld und/oder die Maske einen nicht-geraden Kantenverlauf aufweist.

10. Verfahren nach einem der vorangehenden Ansprüche, bei dem
- bei der Übertragung nach Erreichen einer Überlappung des Strukturfelds (20) auf dem Zylinder (16) eine Belichtung (20) abgeschaltet wird, wobei die Übertragung der ungehärteten Lackschicht (20) nach dem Abschalten fortgesetzt wird.

11. Prägewerkzeug zur Replikation einer Oberflächenstruktur, hergestellt durch ein Verfahren nach einem der vorangehenden Ansprüche, mit
- einem Zylinder als Prägezylinder,
- mit einer Oberflächenstruktur mit mindestens einer Überlappungskante (40) **dadurch gekennzeichnet, dass** der Höhenunterschied der Überlappungskante 100 - 800 nm beträgt.

12. Prägewerkzeug nach Anspruch 11, bei dem
- die Überlappungskante (40) einen nicht-geraden Verlauf aufweist.

13. Geprägtes Produkt, hergestellt mittels eines Prägewerkzeugs nach einem der Ansprüche 11, 12, mit
- einer Oberflächenstruktur mit einem Prägemuster mit wiederkehrender Abbildung einer Überlappungskante (40) **dadurch gekennzeichnet,dass** der Höhenunterschied der Überlappungskante 100 - 800 nm beträgt

14. Vorrichtung zur Herstellung einer strukturierten Oberfläche, mit
- einer ebenen Vorlagefläche (14) mit einer Oberflächenstruktur,
- Mitteln zur Bildung eines Strukturfelds (20) als Lackschicht einer Dicke von 100 - 800 nm auf der Vorlagefläche (14), die die Oberflächenstruktur abformt,
- und Mitteln zum Übertragen des Strukturfelds (20) auf die äußere Oberfläche eines Zylinders (16), **dadurch gekennzeichnet, dass** die ungehärtete Lackschicht (20) von der Vorlagefläche (14) bei einem Abrollen des Zylinders (16) gegenüber der Vorlagefläche (14) auf den Zylinder (16) übertragen wird.

## Claims

1. A method for the production of a cylinder (16) having a structured surface, in which
- a structural field is formed as a lacquer layer (20) with a thickness of 100 - 800 nm on a planar support surface (14) having a surface structure, said lacquer layer molding the surface structure,
- and the structural field (20) is applied onto the outer surface of a cylinder (16), **characterized in that** the uncured lacquer layer (20) is transferred from the support surface (14) onto the cylinder (16) during rolling of the cylinder (16) relative to the support surface (14).

2. The method according to Claim 1, in which
- the structural field (20) is arranged on the outer surface of the cylinder (16) such that at least one overlapping edge (40) is produced.

3. The method according to any one of the preceding claims, in which
- the lacquer layer (20) can be cured by UV,
- and the lacquer layer (20) cures during the transfer.

4. The method according to any one of the preceding claims, in which
- the surface structure has lateral structural widths of less than 100nm.

5. The method according to any one of the preceding claims, in which
- the structural field (20) has at least one non-straight edge (44).

6. The method according to any one of the preceding claims, in which
- an embossing cylinder or an embossing sleeve is produced from the cylinder (16) having the applied structural field (20), wherein at least one metallic layer having a structured surface is produced by electroforming.

7. The method according to any one of the preceding claims, in which
- an exposure to UV light takes place during the transfer of the structural field (20) to the cylinder (16),
- wherein the exposure takes place in a limited, linear exposure field.

8. The method according to any one of the preceding claims, in which
- an exposure to UV light is effected by a projection exposure, in which the light of a UV light source (28) is conducted through a mask (30) and light passing through the mask (30) is projected onto the lacquer layer by means of projection optics (34).

9. The method according to any one of the preceding claims, in which
- the exposure field and/or the mask has/have a non-straight edge profile.

10. The method according to any one of the preceding claims, in which
- during the transfer, after achieving an overlapping of the structural field (20) on the cylinder (16), an exposure (20) is switched off, wherein the transfer of the uncured lacquer layer (20) is continued after the exposure is switched off.

11. An embossing tool for replicating a surface structure, produced by a method according to any one of the preceding claims, having
- a cylinder as the embossing cylinder,
- having a surface structure with at least one overlapping edge (40), **characterized in that** the height difference of the overlapping edge is 100 - 800 nm.

12. An embossing tool according to Claim 11, in which
- the overlapping edge (40) has a non-straight profile.

13. An embossed product, produced by means of an embossing tool according to any one of Claims 11, 12, having
- a surface structure with an embossing pattern having a recurring image of an overlapping edge (40), **characterized in that** the height difference of the overlapping edge is 100 - 800 nm.

14. A device for the production of a structured surface, having
- a planar support surface (14) having a surface structure,
- means for forming a structural field (20) as a lacquer layer with a thickness of 100 - 800 nm on the support surface (14), said lacquer layer molding the surface structure,
- and means for transferring the structural field (20) onto the outer surface of a cylinder (16), **characterized in that** the uncured lacquer layer (20) is transferred from the support surface (14) onto the cylinder (16) during rolling of the cylinder (16) relative to the support surface (14).

## Revendications

1. Procédé de production d'un cylindre (16) doté d'une surface structurée, dans lequel
sur une surface de modèle plane (14) dotée d'une structure de surface est formée une zone de structure sous la forme d'une couche de vernis (20) d'une épaisseur de 100 à 800 nm, laquelle reproduit la forme de la structure de surface,
et la zone de structure (20) est appliquée sur la surface extérieure d'un cylindre (16), **caractérisé en ce que** la couche de vernis (20) non durcie est transférée de la surface de modèle (14) au cylindre (16) pendant le roulement du cylindre (16) par rapport à la surface de modèle (14).

2. Procédé selon la revendication 1, dans lequel
la zone de structure (20) est agencée sur la surface extérieure du cylindre (16) de manière à former au moins un bord de chevauchement (40).

3. Procédé selon l'une des revendications précédentes, dans lequel
la couche de vernis (20) est durcissable aux UV,
et un durcissement de la couche de vernis (20) est effectué pendant le transfert.

4. Procédé selon l'une des revendications précédentes, dans lequel
la structure de surface présente des largeurs de structure latérales inférieures à 100 nm.

5. Procédé selon l'une des revendications précédentes, dans lequel
la zone de structure (20) présente au moins un bord non rectiligne (44).

6. Procédé selon l'une des revendications précédentes, dans lequel
un cylindre de gaufrage ou un manchon de gaufrage est réalisé à partir du cylindre (16) sur lequel est appliquée la zone de structure (20), au moins une couche métallique dotée d'une surface structurée étant réalisée par galvanoformage.

7. Procédé selon l'une des revendications précédentes, dans lequel
une exposition à une lumière ultraviolette est effectuée pendant le transfert de la zone de structure (20) sur le cylindre (16),
l'exposition étant effectuée dans une zone d'éclairage linéaire limitée.

8. Procédé selon l'une des revendications précédentes, dans lequel
une exposition à la lumière ultraviolette est effectuée par exposition par projection, dans laquelle la lumière d'une source de lumière ultraviolette (28) est guidée à travers un masque (30) et de la lumière traversant le masque (30) est projetée sur la couche de vernis au moyen d'une optique de projection (34).

9. Procédé selon l'une des revendications précédentes, dans lequel
la zone d'exposition et/ou le masque présente un tracé de bord non rectiligne.

10. Procédé selon l'une des revendications précédentes, dans lequel
lors du transfert, après atteinte d'un chevauchement de la zone de structure (20) sur le cylindre (16), une exposition (20) est arrêtée, le transfert de la couche de vernis (20) non durcie étant poursuivi après l'arrêt.

11. Outil de gaufrage destiné à la réplication d'une structure de surface, produit à l'aide d'un procédé selon l'une des revendications précédentes, comprenant
un cylindre en tant que cylindre de gaufrage,
doté d'une structure de surface présentant au moins un bord de chevauchement (40), **caractérisé en ce que** la différence de hauteur du bord de chevauchement mesure de 100 à 800 nm.

12. Outil de gaufrage selon la revendication 11, dans lequel
le bord de chevauchement (40) présente un tracé non rectiligne.

13. Produit gaufré fabriqué au moyen d'un outil de gaufrage selon l'une des revendications 11, 12, comprenant
une structure de surface avec un motif de gaufrage présentant une image répétitive d'un bord de chevauchement (40), **caractérisé en ce que** la différence de hauteur du bord de chevauchement mesure de 100 à 800 nm.

14. Dispositif de production d'une surface structurée, comprenant
une surface de modèle plane (14) dotée d'une structure de surface,
des moyens destinés à former une zone de structure (20) sous la forme d'une couche de vernis d'une épaisseur de 100 à 800 nm sur la surface de modèle (14), laquelle reproduit la forme de la structure de surface,
et des moyens destinés au transfert de la zone de structure (20) sur la surface extérieure d'un cylindre (16), **caractérisé en ce que** la couche de vernis (20) non durcie est transférée de la surface de modèle (14) au cylindre (16) pendant le roulement du cylindre (16) par rapport à la surface de modèle (14).
